Europäisches Patentamt

European Patent Office

Office européen des brevets

(19)

(11) Veröffentlichungsnummer: **0 103 301**
**B1**

# (12) EUROPÄISCHE PATENTSCHRIFT

(45) Veröffentlichungstag der Patentschrift:
07.01.87

(51) Int. Cl.⁴: **G 03 B 37/06**

(21) Anmeldenummer: **83109036.0**

(22) Anmeldetag: **13.09.83**

---

(54) **Weitwinkelige optische Vorrichtung.**

---

(30) Priorität: **14.09.82 HU 292182**

(43) Veröffentlichungstag der Anmeldung:
**21.03.84 Patentblatt 84/12**

(45) Bekanntmachung des Hinweises auf die Patenterteilung:
**07.01.87 Patentblatt 87/2**

(84) Benannte Vertragsstaaten:
**AT BE CH DE FR GB IT LI LU NL SE**

(56) Entgegenhaltungen:
**FR - A - 338 386**
**GB - A - 1 026 870**
**GB - A - 1 493 188**
**US - A - 2 304 434**

(73) Patentinhaber: **Központi, Válto-és Hitelbank RC,
Szabadság tér 5-6, H-1054 Budapest (HU)**

(72) Erfinder: **Kalocsai, István, Kossuth u. 57,
4400 Nyiregyháza (HU)**

(74) Vertreter: **Bardehle, Heinz, Dipl.-Ing. et al, Patent- und
Rechtsanwälte Bardehle-Pagenberg-Dost-Altenburg &
Partner Postfach 86 06 20, D-8000 München 86 (DE)**

## Beschreibung

Die Erfindung bezieht sich auf eine optische Weitwinkelvorrichtung, die an optische Geräte anschliessbar und zur Aufnahme und Projektion von Rundbildern geeignet ist, gemäss Oberbegriff des Anspruchs 1. Eine solche Vorrichtung ist z.B aus der GB-A-14 93 188 bekannt.

Der horizontale Sichtwinkel der Objektive von zum Fotografieren der natürlichen und künstlichen Umgebung verwendeten Aufnahmeapparaten liegt zwischen 5° und 180°, wobei letzterer auch Fischaugenoptik genannt wird. Es fehlt jedoch der Bereich der Objektive mit einem Sichtwinkel von 180° bis 360°. Ein Objektiv mit einem horizontalen Sichtwinkel von 360° wäre dazu geeignet, ausser der Umgebung vor dem Aufnahmeapparat auch die Umgebung neben und hinter dem Apparat in einem Einzelbild aufzunehmen und das positive Einzelbild durch umgekehrten Strahlengang an einer Kreisleinwand wiederzugeben.

Es sind verschiedene Versuche für die Erweiterung des horizontalen Sichtwinkels von Aufnahmeapparaten in den letzten Jahrzehnten unternommen worden. Ein solches System wurde unter dem Namen «CINERAMA» bekannt (siehe Karl Röver: Die Technik für Filmvorführer, Halle, 1952. Seiten 252, 253). Nach diesem Verfahren wird die Aufnahme mit drei Kameras auf drei benachbarte Einzelbilder gleichzeitig gemacht. Auch die Projektion geschieht mit drei selbstständigen Projektoren. Das Panoramabild setzt sich aus den nebeneinander projizierten Einzelbildern zusammen. Der durch dieses Verfahren erreichbare Sichtwinkel kann zwischen 135° und 180° frei gewählt werden.

Nach einem weiteren bekannten Verfahren wird die Aufnahme mit elf Kameras auf elf Filme gleichzeitig gefertigt und die Projektion benötigt elf synchrongesteuerte Projektoren Das Bildformat der Einzelbilder ist ein genormtes Rechteck mit einem Seitenverhältnis von 1:1,33; die Kreisleinwand ist also ein polygonales Prisma. Die projizierten Bilder sind durch schwarze Streifen voneinander getrennt Hinter dieser schwarzen Bildspalte ist der der gegenüberliegenden Leinwand zugeordnete Projektor angeordnet. Dieses Verfahren ist unter dem Namen «CYRKORAMA» bekannt und wurde erstmals im Pavillon der Vereinigten Staaten an der Weltausstellung in Brüssel durch Projektion von Kinofilmen vorgestellt.

Heutzutage ist ein Kino mit einem solchen System in Moskau an der Volkswirtschaftsausstellung im Betrieb.

Der Mangel der obenerwähnten Lösungen besteht darin, dass diese Verfahren sowohl bei der Aufnahme als auch bei der Projektion komplizierte, präzise, kostenaufwendige und automatisierte Einrichtungen benötigen Eine Korrektur von Filmbrüchen ist langwierig, und die Menge und die Kosten des Filmmaterials und der Energiebedarf der Projektion sind hoch. Diese Ursachen verhindern die Verbreitung sowohl in der beruflichen Filmindustrie als auch unter den Filmamateuren

Die Aufgabe der vorliegenden Erfindung besteht darin, eine optische Weitwinkelvorrichtung der eingangs genannten Art zu schaffen, mit welcher ein Hauptmotiv im Rundbild leicht auffindbar ist.

Diese Aufgabe wird erfindungsgemäss durch eine optische Weitwinkelvorrichtung gemäss Anspruch 1 gelöst. Das Sucherprisma erleichtert das Auffinden des ausgewählten Hauptmotivs und die Korrektionslinse dient zur Eliminierung der Objektweitendifferenz der Ringlinse und des Sucherprismas. Die Verwendung der erfindungsgemässen Vorrichtung wird bedeutend erleichtert, wenn das Sucherprisma an der Abdeckplatte um die optische Achse frei drehbar angeordnet ist.

Nach einem bevorzugten Ausführungsbeispiel weist die erfindungsgemässe Vorrichtung ein zylinderförmiges Gehäuse auf, an dessen einem Ende die Ringlinse befestigt und an dessen anderen objektivseitigem Ende ein Aussengewinde vorgesehen ist. Dadurch kann die erfindungsgemässe Vorrichtung an jedes im Handel erhältliche optische oder fototechnische Gerät als Ansatz angekoppelt werden.

Nach einem weiteren Ausführungsbeispiel ist es zweckmässig, wenn die Mantelfläche der sich verengenden Öffnung der Ringlinse eine Stumpfkegelfläche mit einem Winkel von 45° zur Horizontalebene der Ringlinse ist. Hierdurch wird ein verzerrungsfreier Betrieb der Vorrichtung erzielt.

Nach einem weiteren Ausführungsbeispiel ist es vorteilhaft, wenn die Mantelfläche der sich verengenden Öffnung der Ringlinse eine toroidale Fläche ist, deren Tangente mit der an ihrer Stelle einsetzbaren Stumpfkegelfläche in den Kreuzungspunkten einen Winkel von höchstens 3° einschliesst.

Nach weiteren zweckmässigen Ausführungsbeispielen kann der äussere Mantel der Ringlinse ein mit der optischen Achse der Ringlinse paralleler Zylindermantel, oder ein konkaver kreisbogenförmiger Mantel oder konvexer kreisbogenförmiger Mantel sein

Nach einem weiteren Ausführungsbeispiel ist ein weiterer optischer Ring um der Ringlinse frei bewegbar angeordnet, Dieser Ring kann ein Ring mit einem Rechteckquerschnitt oder ein plankonkaver Ring oder ein plankonvexer Ring oder ein doppelkonkaver Ring oder ein doppelkonvexer Ring sein. Durch die Anwendung der verschiedenen Ringe nimmt die Zahl der mit der erfindungsgemässen Vorrichtung produzierbaren Aufnahmevariationen zu

Nach einem weiteren Ausführungsbeispiel ist ein quaderförmiger oder zylinderförmiger Prismenaufsatz an einer dem Objektiv zugewandten Grundseite und einer dem Objekt zugewandten Frontseite des Sucherprismas angeschlossen, dessen einen Winkel von 45° zur optischen Achse einschliessende Hinterseite als Spiegelfläche für der Frontseite kommende Strahlen ausgestaltet ist

Nach weiteren vorteilhaften Ausführungsbeispielen kann die Frontseite des Sucherprismas ein konkaver oder konvexer Zylindermantel mit einer zur optischen Achse der Ringlinse querstehenden oder parallellen Längsachse, bzw. eine konkave oder konvexe Kugelfläche mit einem zur optischen Achse der Ringlinse senkrecht stehenden Radius sein.

Nach einem weiteren Ausführungsbeispiel ist es zweckmässig, wenn die Korrekturlinse eine plankonvexe Sammellinse bzw. plankonkave Streulinse ist.

Die in der erfindungsgemässen Vorrichtung verwendeten optischen Mittel wie die Ringlinse, der optische Ring und das Sucherprisma können aus Kronglas oder aus entsprechendem optischem Kunststoff gefertigt werden.

Die verschiedenen Ausgestaltungen des Mantels der Ringlinse in der erfindungsgemässen Vorrichtung dienen zur Veränderung des vertikalen Sichtwinkels und zum Vertausch der Ränder des Objektzylinders. Durch das Sucherprisma wird ein Teil des Mantels des Objektzylinders als Hauptmotiv abgebildet. Durch die Scharfeinstellung des Sucherprismas wird der Schnittkreis des Objektzylindermantels und der Horizontalebene, d.h das Rundbild scharf eingestellt.

Das Rundbild des jeweiligen Objektzylinders, dessen horizontaler Sichtwinkel 360° und dessen vertikaler Sichtwinkel einen Wert zwischen 0°–84° beträgt, wird infolge der Transformation der Ringlinse in der erfindungsgemässen Vorrichtung in der Filmebene des optischen oder fototechnischen Gerätes in der Form eines Ringbildes dargestellt. Die Scharfeinstellung geschieht mit dem Entfernungsverstellelement des Gerätes, nachdem das Sucherprisma auf das Hauptmotiv des Objektzylindermantels gerichtet wurde. Das Bild des Hauptmotivs liegt in der Mitte des Ringbildes und kann in einer oder in beiden Richtungen geschrumpft werden.

Die nach oben oder nach unten gerichteten Komponenten des Objektzylinders erscheinen im Ringbild, von der Mantelausgestaltung der Ringlinse abhängig, als zum Mittelpunkt des Ringbildes oder vom Mittelpunkt nach aussen gerichtete Radien. In den leeren Ecken des Einzelbildes können interne Daten, so z.B. Belichtungszeit, Blende, Entfernung, eventuelle Nivellierung gespeichert werden. Das in der Mitte des Ringbildes liegende Bild des durch das Sucherprisma abgebildeten Hauptmotivs kann als herkömmliches Bild dargestellt werden.

Der Strahlengang der erfindungsgemässen Vorrichtung wird während der Projektion umgekehrt. Das Ringbild auf dem Einzelbild bewirkt eine vollkommene, zusammenhängende und echte Raumwirkung während der Projektion an einer Kreisleinwand. Durch die Abdeckung des Ringbildes oder des Ringlinsenmantels kann das Bild des Hauptmotivs abgestrahlt werden.

Für die Aufnahme wird eine einzige Filmkamera benötigt und auch bei der Wiedergabe soll ein einziger Filmprojektor – mit der erfindungsgemässen Vorrichtung versehen – eingesetzt werden.

Bei der Projektion erscheint ein richtiges Bild, wenn eine Ringlinse mit entgegengesetzt ausgestaltetem Aussenmantel im Vergleich zur Aufnahme eingesetzt wird. Der Projektor soll im Mittelpunkt der Kreisleinwand über den Köpfen der Zuschauer aufgehängt werden, so dass der Innenraum übersichtlich bleibt.

Die erfindungsgemässe optische Weitwinkelvorrichtung ist auch zur Prüfung von Eigenschwingungen von Baukonstruktionen geeignet, indem Stimmgabeln bekannter Schwingungszahlen in der Nähe der Horizontalebene und flimmernde Streifen an den Konstruktionselementen des Gebäudes angebracht werden. Die Bildfarbvalenz ist der Schwingungszahl proportional, so dass die ideale Eigenschwingungszahl und der Dynamikfaktor durch Interpolation festgestellt und durch entsprechende Veränderung der Spannweite und der Masse eingestellt werden können. Durch gleichmässiges Drehen des mit der erfindungsgemässen Vorrichtung ausgestatteten Aufnahmegerätes um die optische Achse kann auch ein Schwingungsgrafikon aufgezeichnet werden.

Die Erfindung soll nachfolgend anhand der Zeichnung näher erläutert werden. Es zeigen in der Zeichnung:

Fig. 1 einen Schnitt durch eine in einem Ausführungsbeispiel der erfindungsgemässen optischen Weitwinkelvorrichtung verwendeten Ringlinse mit zylindrischem Aussenmantel und stumpfkegelförmigem Innenmantel,

Fig. 2 einen Schnitt durch eine Ringlinse mit einer toroidalen inneren Mantelfläche,

Fig. 3 einen Schnitt durch die mit einem weiteren optischen Ring ergänzte Ringlinse nach Fig. 1, wobei der weitere Ring einen Rechteckquerschnitt aufweist,

Fig. 4 einen Schnitt durch die Ringlinse nach Fig. 1 und einen weiteren plankonkaven Ring,

Fig. 5 einen Schnitt durch die Ringlinse nach Fig. 1 und einen weiteren doppelkonkaven Ring,

Fig. 6 einen Schnitt durch die Ringlinse nach Fig. 1 und einen weiteren plankonvexen Ring,

Fig. 7 einen Schnitt durch die Ringlinse nach Fig. 1 und einen weiteren doppelkonvexen Ring,

Fig. 8 eine Draufsicht eines Ausführungsbeispieles der erfindungsgemässen Vorrichtung mit einem fiktiven Objektzylinder,

Fig. 9 den Strahlengang und einen Längsschnitt der Vorrichtung nach Fig. 8,

Fig. 10 ein belichtetes Einzelbild,

Fig. 11 den Strahlengang und den Längsschnitt eines weiteren Ausführungsbeispieles der erfindungsgemässen Vorrichtung,

Fig. 12 ein belichtetes Einzelbild,

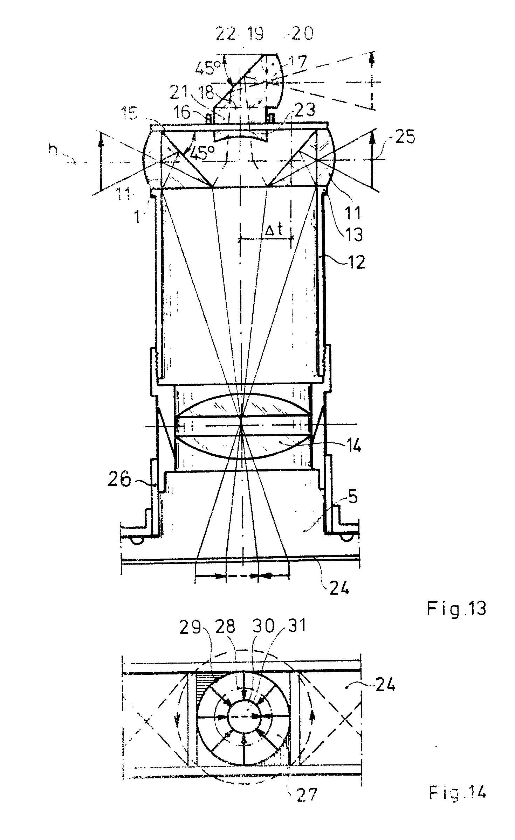

Fig. 13 den Strahlengang und den Längsschnitt eines weiteren Ausführungsbeispieles der erfindungsgemässen Vorrichtung, und

Fig. 14 ein belichtetes Einzelbild.

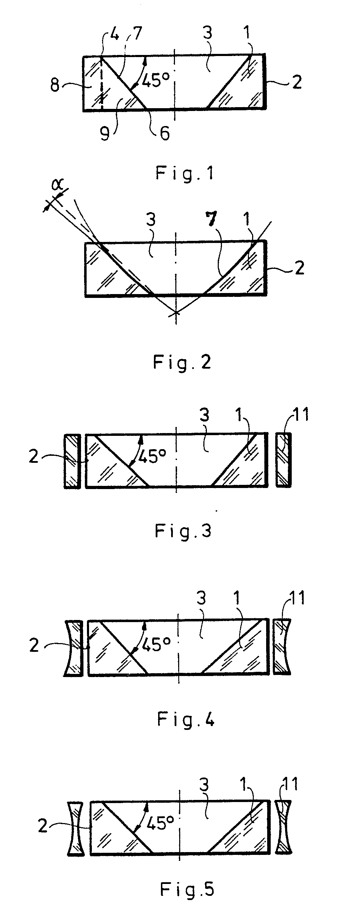

Wie es aus der Fig. 1 ersichtlich ist, weist eine aus Kronglas oder optischem Kunststoff gefertigte Ringlinse 1 nach ihrer Grundform einen zylindrischen äusseren Mantel 2 auf. In Inneren der Ringlinse 1 ist konzentrisch eine optische Öffnung 3 ausgebildet, so dass die Ringlinse 1 einen stumpfkegelförmigen inneren Mantel 7 hat, der einen Winkel von 45° mit der Vertikalen einschliesst und welcher als optische Spiegelfläche ausgebildet ist. Die Öffnung 3 ist oben durch einen Grundkreis 4 und unten durch einen einem Fotoapparat 5 näher liegenden Spitzenkreis 6 begrenzt. Der Schnitt durch die Ringlinse 1 zeigt, dass diese aus einem Rechteck 8 und einem rechtwinkligen, gleichschenkeligen Dreieck 9 zusammengesetzt ist. Der Durchmesser des Spitzenkreises 6 beträgt ein Drittel des Durchmessers der Ringlinse 1.

Nach dem Ausführungsbeispiel gemäss Fig. 2 ist die konzentrische Öffnung 3 im Inneren der Ringlinse 1 so ausgebildet, dass ihr Mantel 7 eine toroidale Fläche statt einer Stumpfkegelform aufweist, wobei der Mantel 7 mit einer Leitkurve dem Grundkreis 4 und dem Spitzenkreis 6 angepasst ist, und die Tangente der Oberfläche mit der an ihrer Stelle einsetzbaren Stumpfkegelfläche in den Kreuzungspunkten einen Winkel von höchstens 3° einschliesst.

In den Figuren 3–7 ist die erfindungsgemässe Ringlinse 1 mit zylindrischem Mantel 2 und verschiedenförmigen zusätzlichen optischen Ringen 11 sichtbar. Die Ringlinse 1 und der jeweilige zusätzliche optische Ring 11 stehen in Klemmverbindung miteinander.

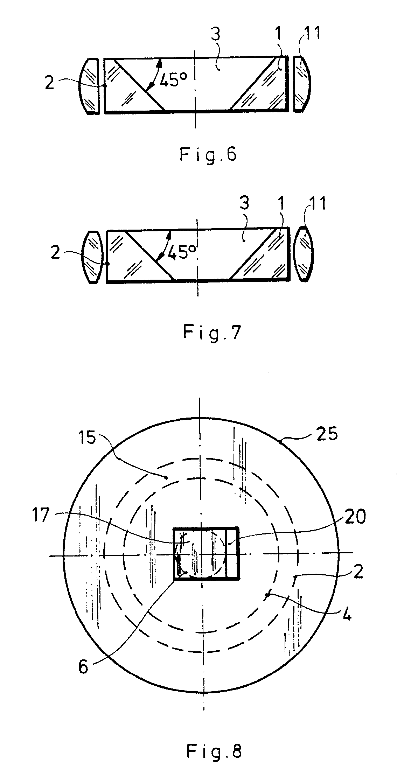

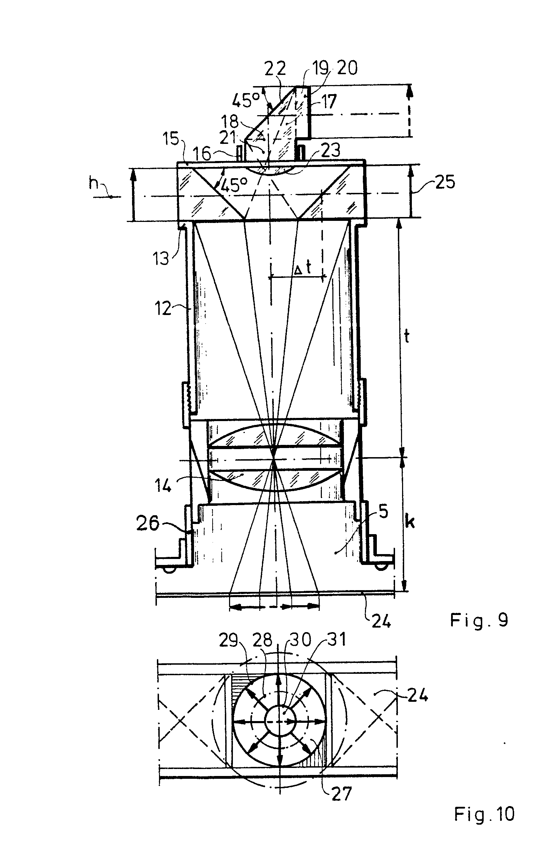

Wie aus den Figuren 8 und 9 ersichtlich ist, ist die Ringlinse 1 an einer Kante 13 eines Gehäuses 12 durch Kleben befestigt. Das Gehäuse 12 ist ein lichtundurchlässiger Metallzylinder, der an seinem der Ringlinse 1 entgegengesetzten Ende ein Aussengewinde ähnlich wie bei den im Handel erhältlichen Lichtfiltern hat. Dieses Vatergewinde sichert die einfache, lösbare und sichere Verkoppelung der erfindungsgemässen Vorrichtung und des jeweiligen optischen oder fototechnischen Gerätes. Das Gehäuse 12 sichert die Übereinstimmung der optischen Achsen der Ringlinse 1 und eines Objektives 14 des Fotoapparates 5. Die Stirnseite der Ringlinse 1 ist mit einer durch Kleben befestigten und lichtundurchlässigen Abdeckplatte 15 bedeckt. Diese Abdeckplatte 15 verhindert das direkte oder indirekte Eindringen von ungewünschten Streustrahlen durch die Ringlinse 1 in das Gehäuse 12 oder in das Objektiv 14. In einer an der Abdeckplatte 15 konzentrisch angeordneten Hülse 16 ist ein Sucherprisma 17 eingepasst. Der Querschnitt des Sucherprismas 17 ist mit dem einfachen Hauptschnitt der Ringlinse 1 gleich. An einer Grundseite 18 und einer Frontseite 19 ist je ein quaderförmiger Prismenaufsatz 20, 21 befestigt, und eine Hinterseite 22 des Sucherprismas 17 schliesst mit der optischen Achse einen Winkel von 45° ein, wobei die Hinterseite 22 als eine Spiegelfläche von der Frontseite 19 her gesehen ausgestaltet ist. Die Hinterseite 22 des Sucherprismas 17 kann auch durch einen Planspiegel ersetzt werden. An der Unterseite der die optische Öffnung 3 der Ringlinse 1 abschliessenden Abdeckplatte 15 ist eine plankonvexe Sammellinse als Korrekturlinse 23 koaxial durch Kleben befestigt. Die Aufgabe der Korrekturlinse 23 ist der Ausgleich der Differenz der Objektweite zwischen der Ringlinse 1 und dem Sucherprisma 17.

In der Fig. 10 ist ein Einzelbild dargestellt, das mit einem mit der erfindungsgemässen Vorrichtung versehenen Fotoapparat 5 belichtet wurde. Die Lichtstrahlen projizieren die Objektzylinderpunkte von dem Mantel des in einer eingestellten Objektweite t des Fotoapparates 5 liegenden Objektzylinders 25 verkleinert und verzerrt auf den spiegelnden Mantel 7 der Ringlinse 1, und das Objektiv 14 des Fotoapparates 5 transformiert diese Lichtstrahlen auf den Film 24 auf solche Weise, dass ein Mittelkreis 28 eines Ringbildes 27 in der Filmebene einem Schnittkreis des Objektzylinders 25 und einer Horizontalebene h entspricht. Die Bildpunkte im Ringbild 27 lichten sich vom Mittelkreis 28 nach aussen und verdichten sich vom Mittelkreis 28 zum Mittelpunkt hin. Für die Veränderung der Länge des Objektzylinders 25 dient der herkömmliche Entfernungsversteller des Objektives 14.

Das Bild der durch das Sucherprisma 17 ausgewählten Objektebene liegt in der Mitte des Einzelbildes im Film 24, wobei die Bildpunkte in einer Richtung oder in beiden aufeinander senkrechten Richtungen oder zentral geschrumpft sind.

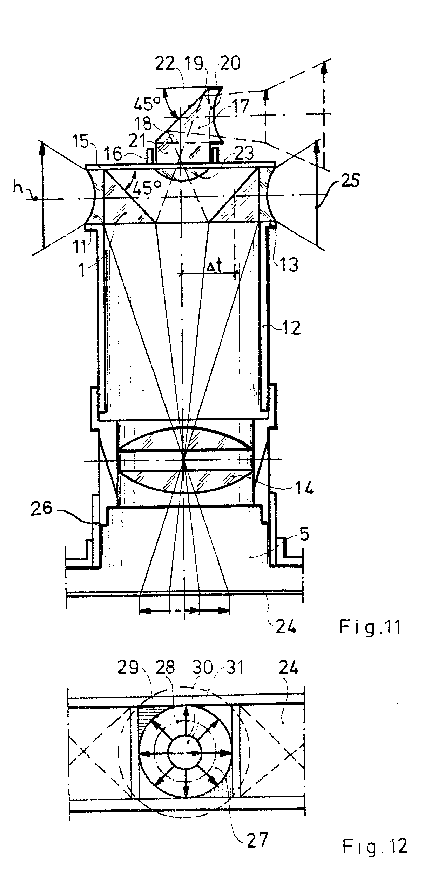

In der Fig. 11 ist ein Ausführungsbeispiel der erfindungsgemässen weitwinkeligen optischen Vorrichtung sichtbar, in dem eine Ringlinse 1 mit stumpfkegelförmigem innerem Mantel 7 und zylindrischem äusserem Mantel 2 an dem Gehäuse 12 befestigt ist. Ein plankonkaver optischer Ring 11 ist dem Mantel 2 der Ringlinse 1 angeschlossen, dementsprechend ist ein Prismenaufsatz 20 mit einem konkaven zylindrischen Mantel und mit einer zur optischen Achse der Ringlinse 1 senkrecht stehenden Längsachse der Frontseite 19 des Sucherprismas 17 angepasst. An der Unterseite der Abdeckplatte 15 ist eine plankonvexe Sammellinse als Korrekturlinse 23 angeklebt. Die Richtung der Komponente des Objektzylinders 25 stimmt bei der Ringlinse 1 mit konkavem kreisbogenförmigem Mantel 2 mit dem Strahlengang der Ringlinse 1 mit zylindrischem Mantel 2 überein.

Ein mit der oben dargestellten Vorrichtung belichtetes Einzelbild ist in der Fig. 12 sichtbar. Das Bild des Mantels des Objektzylinders 25 erscheint als ein Ringbild 27 auf dem Film 24, wobei ein das Ringbild 27 begrenzender innerer konzentrischer Kreis 30 mit der Abbildung des Spitzenkreises 6 der Ringlinse 1, d.h. mit der Abbildung des Grundkreises des Objektzylinders 25, und ein weiterer das Ringbild 27 begrenzender äusserer konzentrischer Kreis 29 mit der Abbildung des Grundkreises 4 der Ringlinse 1, d.h. mit der Abbildung des Dachkreises des Objektzylinders 25 gleich ist. Bei einer Bildtransformation mit der Ringlinse 1 mit einem konkaven kreisbogenförmigen Mantel 2 entspricht die nach oben zeigende Richtung der Komponente des Objektzylinders 25 der vom Mittelpunkt nach aussen zeigenden Richtung im Ringbild 27 ebenso wie bei der Ringlinse 1 mit zylindrischem Mantel 2. Der äussere Kreis 29 berührt die Seiten des Einzelbildes auf dem Film 24. Mit der Hilfe eines als Fotozubehör erhältlichen Zwischenringes 26 oder Balgens kann die Objektweite t des Objektives 14 so eingestellt werden, dass der äussere Kreis 29 die Ecken des Einzelbildes auf dem Film 24 berührt. Im erstbenannten Fall können verschiedene interne Daten, z.B. Belichtungszeit, Blende, Entfernung, eventuelle Nivellierung in den leeren Ecken des Einzelbildes aufgezeichnet werden.

In einem weiteren Ausführungsbeispiel der erfindungsgemässen Vorrichtung sind eine Ringlinse 1 mit stumpfkegelförmigem Mantel 7, und mit einem mit plankonvexem optischem Ring 11 ergänzten zylindrischen Mantel 2, ein Sucherprisma 17 mit einer konvexen kugelförmigen Frontseite 19 und eine plankonkave Streulinse als Korrekturlinse 23 angeordnet.

Ein mit der oben beschriebenen Vorrichtung belichtetes Einzelbild ist in der Fig. 14 sichtbar. Die Richtung der Komponente des Objektzylinders 25 wird durch die einen konvexen kreisbogenförmigen äusseren Mantel 2 aufweisende Ringlinse 1 um 180° umgekehrt, verglichen mit dem Strahlengang der Ringlinse 1 mit konkavem kreisbogenförmigem oder zylindrischem Mantel 2. Bei der Aufnahme mit der einen konvexen kreisbogenförmigen Mantel 2 aufweisenden Ringlinse 1 entspricht die nach oben weisende Richtung der Komponente des Objektzylinders 25 einer im Ringbild 27 zum Mittelpunkt zeigenden Richtung.

Das durch das Sucherprisma 17 übermittelte Bild liegt in der Ebene des Objektzylinders 25, so dass ein auf dem Einzelbild in der Mitte befindliches flaches Bild 31 durch die Scharfeinstellung das Sucherbildes scharf eingestellt werden kann. Das flache Bild 31 kann zur Aufnahme des Hauptmotivs unabhängig von dem Ringbild 27 verwendet werden.

Die mit einer kontinuierlichen Linie gezeichneten Pfeile in den Figuren stellen die nach oben weisenden Komponente des Objektzylinders 25 und deren Abbildungen auf dem Einzelbild dar. Die mit gestrichelter Linie gezeichneten Pfeile stellen eine mittlere Gerade der Objektebene des Sucherprismabildes und deren Abbildung auf dem Einzelbild dar.

Durch Umkehren des Strahlenganges kann das durch den mit der erfindungsgemässen Vorrichtung ergänzten Fotoapparat gefertigte Bild auf einer Kreisleinwand oder einem Kreisfotopapier als Rundbild mit einem aus einer Lichtquelle, einem Parabolspiegel und einer Sammellinse bestehenden Projektor dargestellt werden. Die Projektionsentfernung, das Verhältnis der Höhe und des Umfanges des Rundbildes kann durch die Korrektur des Brennpunktes und der Brennweite verändert werden Das flache Bild 31 kann durch das Sucherprisma 17 auf eine Leinwand oder ein Fotopapier projiziert werden. In diesem Fall ist die Ringlinse 1 auch an ihrem Mantel 2 abgedeckt und das projizierte Bild weist eine Normalgrösse oder eine Panoramagrösse abhängig von der Frontseitengestaltung des Sucherprismas 17 auf

Die erfindungsgemässe Vorrichtung kann an Fotoapparaten, Filmkameras, FS-Kameras, Videokameras, an optischen Instrumenten und Geräten sowie an Bildprojektoren angeschlossen werden.

Die Vorrichtung kann zur Prüfung von Eigenschwingungen von dreidimensionalen Baukonstruktionen verwendet werden An einer Seite der in einer zur Horizontalebene senkrecht liegenden Ebene schwingenden kritischen Baukonstruktion werden flimmernde Streifen geklebt und Stimmgabeln bekannter Schwingungszahlen werden in der Nähe der Stelle des Höchstausschlages zur Schwingungsebene parallel angeordnet. Das Sucherprisma wird auf die Stimmgabel gerichtet und gleichzeitig werden diese und die Baukonstruktion in Schwingung gebracht. Nach der Aufnahme des Rundbildes verändert sich die Bildfarbvalenz der schwingenden Elemente im Ringbild 27 und im flachen Bild 31 im Zusammenhang mit der Schwingungszahl. Nach der Vergrösserung oder der Projektion des positiven Bildes kann die Schwingungszahl der Stimmgabel mit der Schwingungszahl des Bauelementes verglichen und die Eigenschwingungszahl der Baukonstruktion und der damit gekoppelten Konstruktionsteile durch Interpolation festgestellt werden. Nach Kenntnis der Eigenschwingungszahl kann die ideale Eigenschwingungszahl oder der Dynamikfaktor der Baukonstruktion durch Veränderung der Spannweite und der Masse eingestellt werden.

Nach einer Weiterentwicklung der obigen Prüfung werden mehrere flimmernde Punkte an der Baukonstruktion aufgeklebt und gleichzeitig mit der Aufnahme wird der Film 24 in seiner Ebene um seine optische Achse gleichmässig verdreht. Das Bild des flimmernden Punktes erscheint in der Form eines Schwingungsgrafikons in dem Ringbild 27 und im flachen Bild 31.

Es kann als Vorteil der erfindungsgemässen optischen Weitwinkelvorrichtung bezeichnet werden, dass ihr horizontaler Sichtwinkel 360° beträgt und ihr vertikaler Sichtwinkel zwischen 0°–84° liegt, und dass sie jedem bekannten optischen oder fototechnischen Gerät gekoppelt werden kann.

**Patentansprüche**

1. Optische Weitwinkelvorrichtung, welche an optische Geräte (5) anschliessbar und zur Aufnahme und Projektion von Rundbildern geeignet ist, mit einer Ringlinse (1), deren äussere Mantelfläche (2) lichtdurchlässig ist und die eine sich in Richtung des Objektivs (14) des optischen Geräts verengende Öffnung (3) aufweist, deren Mantelfläche (7) als Spiegelfläche für die von der äusseren Mantelfläche (2) der Ringlinse kommenden Strahlen ausgebildet ist, und mit einer die Ringlinse nach aussen abdeckenden Platte (15), wobei die optische Achse der Ringlinse mit der optischen Achse des Objektivs übereinstimmt, dadurch gekennzeichnet, dass an der Aussenseite der Abdeckplatte (15) ein Sucherprisma (17) und an der Innenseite der Abdeckplatte eine Korrekturlinse (23) koaxial zur Ringlinse (1) angeordnet sind.

2. Vorrichtung nach Anspruch 1, dadurch gekennzeichnet, dass das Sucherprisma (17) an der Abdeckplatte (15) um die optische Achse frei drehbar angeordnet ist.

3. Vorrichtung nach Anspruch 1 oder 2, gekennzeichnet durch ein zylinderförmiges Gehäuse (12), an dessen einem Ende die Ringlinse (1) befestigt ist und an dessen anderem objektivseitigem Ende ein Aussengewinde vorgesehen ist.

4. Vorrichtung nach einem der Ansprüche 1 bis 3, dadurch gekennzeichnet, dass die Mantelfläche (7) der sich verengenden Öffnung (3) der Ringlinse (1) eine Stumpfkegelfläche mit einem Winkel von 45° zur Horizontalebene der Ringlinse (1) ist.

5. Vorrichtung nach einem der Ansprüche 1 bis 3, dadurch gekennzeichnet, dass die Mantelfläche (7) der sich verengenden Öffnung (3) der Ringlinse eine toroidale Fläche ist, deren Tangente mit der an ihrer Stelle einsetzbaren Stumpfkegelfläche in den Kreuzungspunkten einen Winkel von höchstens 3° einschliesst.

6. Vorrichtung nach einem der Ansprüche 1 bis 5, dadurch gekennzeichnet, dass um die Ringlinse (1) ein weiterer optischer Ring (11) frei bewegbar angeordnet ist.

7. Vorrichtung nach einem der Ansprüche 1 bis 6, dadurch gekennzeichnet, dass ein quaderförmiger oder zylinderförmiger Prismenaufsatz (20, 21) jeweils an eine dem Objektiv zugewandte Grundseite (18) und an eine dem Objekt zugewandte Frontseite (19) des Sucherprismas (17) angeschlossen ist und dass eine einen Winkel von 45° zur optischen Achse einschliessende Hinterseite (22) des Sucherprismas als Spiegelfläche für von der Frontseite kommende Strahlen ausgestaltet ist

8. Vorrichtung nach einem der Ansprüche 1 bis 7, dadurch gekennzeichnet, dass die Korrekturlinse (23) eine Sammellinse ist

9. Vorrichtung nach einem der Ansprüche 6 bis 8, dadurch gekennzeichnet, dass die Ringlinse (1), der weitere optische Ring (11) und das Sucherprisma (17) aus Kunststoff bestehen

**Revendications**

1. Dispositif optique grand-angulaire susceptible d'être monté sur un appareil optique (5) pour la prise et la projection d'images panoramiques ou circulaires, comprenant une lentille annulaire (1) dont la surface externe (2) est transparente et qui présente une ouverture (3) allant en se rétrécissant dans la direction de l'objectif (14) de l'appareil optique, dont la surface d'enveloppe (7) forme surface de réflexion pour les rayons venant de la surface externe (2) de la lentille annulaire, ainsi qu'une plaque (15) couvrant vers l'extérieur la lentille annulaire, l'axe optique de la lentille annulaire coïncidant avec l'axe optique de l'objectif, caractérisé par le fait que sont disposés sur la face extérieure de la plaque 15 de couverture (15) un prisme de visée (17) et sur la face intérieure de la plaque de couverture une lentille corrective (23) coaxiale à la lentille annulaire (1).

2. Dispositif selon la revendication 1, caractérisé par le fait que le prisme de visée (17) est monté sur la plaque de couverture (15) à libre rotation autour de l'axe optique.

3. Dispositif selon la revendication 1 ou 2, caractérisé par le fait qu'un boîtier cylindrique (12) présente à l'une de ses extrémité la lentille annulaire (1) qui y est fixée et à l'autre extrémité du côté de l'objectif un filetage extérieur.

4. Dispositif selon l'une des revendications 1 à 3, caractérisé par le fait que la surface d'enveloppe (7) de l'ouverture (3) de la lentille annulaire (1) qui se rétrécit est un tronc de cône faisant un angle de 45° avec le plan horizontal de la lentille annulaire (1).

5. Dispositif selon l'une des revendications 1 à 3, caractérisé par le fait que la surface d'enveloppe (7) de l'ouverture (3) de la lentille annulaire qui se rétrécit est une surface toroidale dont la tangente fait aux points de croisement un angle d'au plus 3° avec le tronc de cône susceptible de prendre sa place.

6. Dispositif selon l'une des revendications 1 à 5, caractérisé par le fait qu'un anneau optique (11) complémentaire librement mobile est disposé autour de la lentille annulaire (1).

7. Dispositif selon l'une des revendications 1 à 6, caractérisé par le fait qu'un élément additionnel parallélépipédique ou cylindrique (20, 21) au prisme est appliqué à chacune des faces du viseur prismatique (17), la face de base (18) orientée vers l'objectif et la face frontale (19) orientée vers l'objet, et que la face arrière (22) du viseur prismatique faisant un angle de 45° avec l'axe optique constitue une surface réfléchissante pour les rayons venant de la face frontale.

8. Dispositif selon l'une des revendications 1 à 7, caractérisé par le fait que la lentille de correction (23) est une lentille convergente.

9. Dispositif selon l'une des revendications 6 à 8, caractérisé par le fait que la lentille annulaire (1), l'anneau optique complémentaire (11) et le prisme de visée (17) sont en matière synthétique.

**Claims**

1. Optical wide-angle device that can be connected to optical apparatus (5) and is suitable for receiving and projecting circular images, having an annular lens (1) of which the outer surface (2) is light-permeable and has an opening (3) which tapers in the direction towards the objective (14) of the optical apparatus and of which the surface (7) is constructed as a reflecting surface for the rays coming from the outer surface (2) of the annular lens, and having a plate (15) which covers the annular lens towards the outside, the optical axis of the annular lens corresponding to the optical axis of the objective, characterised in that on the outer side of the cover plate (15) there is arranged a viewfinder prism (17) and on the inside of the cover plate there is arranged a correction lens (23) coaxially with the annular lens (1).

2. Device according to claim 1, characterised in that the viewfinder prism (17) is arranged on the cover plate (15) so as to be freely rotatable about the optical axis.

3. Device according to claim 1 or 2, characterised by a cylindrical housing (12) at one end of which there is attached the annular lens (1) and at the other, objective-side of which there is provided an external thread.

4. Device according to any one of claims 1 to 3, characterised in that the surface (7) of the tapering opening (3) of the annular lens (1) is a truncated conical surface forming an angle of 45° with the horizontal plane of the annular lens (1).

5. Device according to any one of claims 1 to 3, characterised in that the surface (7) of the tapering opening (3) of the annular lens is a toroidal surface the tangent of which forms with the conical truncated surface that can be used in its place at an angle of a maximum of 3° at the points of intersection.

6. Device according to any one of claims 1 to 5, characterised in that a further optical ring (11) is arranged around the annular lens (1) in such a manner that it is freely movable.

7. Device according to any one of claims 1 to 6, characterised in that a cuboid or cylindrical prism attachment (20, 21) is attached to each of the base side (18) facing the objective, of the viewfinder prism (17), and the front side (19), facing the subject, of the viewfinder prism (17), and that a rear side (22) of the viewfinder prism, forming an angle of 45° with the optical axis, is constructed as a reflecting surface for rays coming from the front side.

8. Device according to any one of claims 1 to 7, characterised in that the correction lens (23) is a collecting lens.

9. Device according to any one of claims 6 to 8, characterised in that the annular lens (1), the further optical ring (11) and the viewfinder prism (17) are made of plastics.

1/5

Fig.1

Fig.2

Fig.3

Fig.4

Fig.5

9

2/5

Fig.6

Fig.7

Fig.8

3/5

Fig. 9

Fig. 10

4/5

Fig.11

Fig.12

5/5

Fig.13

Fig.14